# FASCICULE DE BREVET EUROPEEN

(11) **EP 2 846 394 B1**
(45) Date de publication et mention de la délivrance du brevet: **09.03.2016**
(21) Numéro de dépôt: 13183802.1
(22) Date de dépôt: 10.09.2013
(51) Int. Cl.: H01M 10/42, H01M 10/48, H02J 7/00

(54) **Batterie intelligente munie d'un circuit de gestion de la tension d'alimentation**
Intelligente Batterie, die mit einem Schaltkreis zur Steuerung der Speisespannung ausgestattet ist
Smart battery provided with a circuit for managing the supply voltage

(43) Date de publication de la demande: 11.03.2015
(73) Titulaire: The Swatch Group Research and Development Ltd., 2074 Marin (CH)
(72) Inventeur: Willemin, Michel, 2515 Prêles (CH); Degrauwe, Marc, 2025 Chez-le-Bart (CH); Rota, Sergio, 2013 Colombier (CH)
(74) Mandataire: Ravenel, Thierry Gérard Louis

(56) Documents cités:
- EP-A1- 1 892 791
- US-A- 5 610 450
- US-A1- 2004 196 004
- US-A1- 2005 163 309
- US-B1- 6 198 250
- "AVR318: Dallas 1-Wire master", 8-bit AVR Microcontrollers - Application Note, 1 septembre 2004 (2004-09-01), XP055092372, Extrait de l'Internet: URL:http://www.atmel.com/images/doc2579.pd f [extrait le 2013-12-09]
- "Dallas Semiconductor. Application Note 122: Using Dallas' 1-Wire Chips in 1-cell Li+ battery packs with low-side n-channel safety FETs", , 5 janvier 2000 (2000-01-05), pages 1-2, XP055092608, Extrait de l'Internet: URL:http://www.datsi.fi.upm.es/docencia/Mi cro_C/dallas/app122.pdf [extrait le 2013-12-10]
- DALLAS SEMICONDUCTOR: "DS2760 High-Precision Li+ Battery Monitor", INTERNET CITATION, 1 septembre 2006 (2006-09-01), pages 1-26, XP002658011, Extrait de l'Internet: URL:http://datasheets.maxim-ic.com/en/ds/D S2760.pdf [extrait le 2011-08-29]
- "Application Report SLVA101. HDQ Communication Basics for TI's Battery Monitor ICs", , 1 mai 2001 (2001-05-01), pages 1-8, XP055092630, Extrait de l'Internet: URL:http://www.ti.com/lit/an/slva101/slva1 01.pdf [extrait le 2013-12-10]
- JAVIER IBÁÑEZ VIAL ET AL: "Monitoring Battery System for Electric Vehicle, Based On "One Wire" Technology", IEEE VEHICULAR POWER PROPULSION VPP-2004, 8 octobre 2004 (2004-10-08), pages 1-5, XP055092604,

## Description

L'invention concerne une batterie intelligente, qui est munie d'un circuit électronique de gestion de la tension d'alimentation. Le circuit électronique comprend un détecteur de fin de vie de batterie EOL, un étage oscillateur, une unité de gestion de la puissance et une interface de communication. Le circuit électronique comprend aussi un convertisseur DC-DC mis en fonction, dès que la tension d'alimentation est proche ou égale à un seuil de fin de vie de batterie EOL. Ceci peut permettre de prolonger la durée de vie du produit utilisant cette batterie en continuant à fournir une tension au-dessus de la limite minimale, et en extrayant sa puissance résiduelle. Le courant maximum fourni par la batterie peut aussi être limité par l'unité de gestion, afin de prolonger également sa durée de vie donc également celle du produit. Cette batterie peut être primaire, mais aussi rechargeable.

Une pile ou batterie peut comprendre de manière connue un circuit de gestion notamment de l'alimentation, qui est intégré dans la structure de la pile ou batterie. On peut citer à ce titre le brevet US 6,198,250 B1, qui décrit une telle pile ou batterie intelligente, qui comprend un circuit contrôleur. Le circuit contrôleur est relié aux bornes d'alimentation de la pile ou batterie. Ce circuit contrôleur permet d'étendre la durée de vie de la batterie. Pour ce faire, le circuit contrôleur comprend un convertisseur DC-DC cadencé par un oscillateur pour convertir la tension de la pile ou batterie en une tension de sortie, qui peut être plus élevée qu'une tension de coupure ou une tension de fin de vie de batterie. Le convertisseur peut être enclenché dès l'instant où la tension de batterie atteint un seuil de tension de fin de vie de batterie de manière à prolonger la durée de vie de la batterie.

Dans la pile ou batterie intelligente du brevet US 6,198,250 B1, il n'est prévu aucun moyen dans le circuit contrôleur pour effectuer une transmission de données numériques à destination d'un dispositif électronique alimenté par la batterie intelligente. Aucune information concernant notamment la fin de vie de la batterie ou le type de batterie utilisée n'est communiquée vers l'extérieur de la pile ou la batterie intelligente pour assurer le bon fonctionnement du dispositif électronique avant le changement de batterie, ce qui constitue un inconvénient.

On peut citer également la demande de brevet WO 2005/081787 A1, qui décrit une batterie munie d'un circuit électronique. Le circuit électronique de la batterie comprend une mémoire non volatile, un thermistor, une unité d'identification de tension, un commutateur sous la forme d'un transistor du type FET en série avec le thermistor, et une borne d'interface de données de la batterie. La borne d'interface de données est reliée à la mémoire non volatile, qui est branchée aux bornes de la batterie rechargeable. Le commutateur est contrôlé par l'unité d'identification de tension. Si le niveau de tension est faible, le commutateur est ouvert, ce qui ne permet pas d'opérer une mesure par l'intermédiaire du thermistor, mais par contre une communication peut être établie entre un chargeur et le circuit de la batterie par une borne d'horloge en liaison à la mémoire. Par contre si le niveau de tension est suffisant une mesure du thermistor est effectuée par le chargeur pour déterminer la température du circuit à batterie.

Plusieurs bornes pour l'alimentation en tension et la communication de données doivent être prévues pour la batterie munie du circuit électronique dans la demande de brevet WO 2005/081787 A1. Ainsi, cela complique la réalisation de ladite batterie et ne permet pas de rationnaliser de manière convenable la fourniture d'une tension d'alimentation et la fourniture de données vers l'extérieur de la batterie, ce qui constitue un inconvénient.

La demande de brevet EP 1 892 791 A1 décrit un bloc de batterie, qui comprend une batterie liée à un circuit électronique de gestion de la tension d'alimentation. Le circuit électronique comprend des moyens de détection d'état de fonctionnement pour détecter un courant, une tension et une température. Ces moyens de détection sont reliés à une unité de commande. Une interface de communication liée à l'unité de commande est également prévu pour communiquer avec un instrument électronique par un signal modulé. Le circuit électronique n'est par contre pas prévu pour adapter certains paramètres de fonctionnement, ce qui constitue un inconvénient.

L'invention a donc pour but de fournir une batterie intelligente, qui est munie d'un circuit électronique de gestion de la tension d'alimentation susceptible de communiquer des données à un dispositif électronique alimenté par la batterie intelligente et palliant les inconvénients susmentionnés de l'état de la technique.

A cet effet, l'invention concerne une batterie intelligente munie d'un circuit électronique de gestion de la tension d'alimentation, qui comprend les caractéristiques mentionnées dans la revendication indépendante 1.

Des formes d'exécution particulières de la batterie intelligente sont définies dans les revendications dépendantes 2 à 12.

Un avantage de la batterie intelligente réside dans le fait que la communication de données est effectuée sur un même fil de connexion d'une des bornes d'alimentation de la batterie intelligente. De préférence, la communication de données est effectuée sur le fil de connexion de la borne de potentiel haut de la batterie intelligente. Les données numériques peuvent être transmises sur l'alimentation par fenêtres temporelles de durée différente selon l'état de chaque bit à transmettre ou éventuellement au moyen d'une modulation de phase ou de fréquence. Les données modulées à transmettre peuvent être un signal numérique de fin de vie de batterie.

Avantageusement, une interface à 1-fil, qui est contrôlée par une unité de gestion du circuit électronique de gestion de la tension d'alimentation, fournit un signal numérique modulé de données ou commandes par la borne positive de la batterie intelligente. Comme l'unité de gestion est cadencée par un signal d'horloge d'un étage oscillateur du type horloger, l'interface à 1-fil est en mesure de fournir un signal modulé de données relatif à un signal top seconde pour un appareil électrique comprenant la batterie intelligente.

Les buts, avantages et caractéristiques de la batterie intelligente munie d'un circuit électronique de gestion de la tension d'alimentation apparaîtront mieux dans la description suivante sur la base d'une forme d'exécution simplifiée non limitative et illustrée par les dessins sur lesquels :
la figure 1 représente de manière simplifiée les composants de la batterie intelligente munie du circuit électronique de gestion de la tension d'alimentation selon l'invention, et
la figure 2 représente un graphique de l'évolution de la tension d'alimentation fournie par la batterie intelligente selon l'invention par rapport à l'évolution de la tension d'alimentation fournie par une batterie traditionnelle.

Dans la description suivante, tous les composants électroniques du circuit électronique de la batterie, qui sont bien connus d'un homme du métier dans ce domaine technique, ne sont décrits que de manière simplifiée.

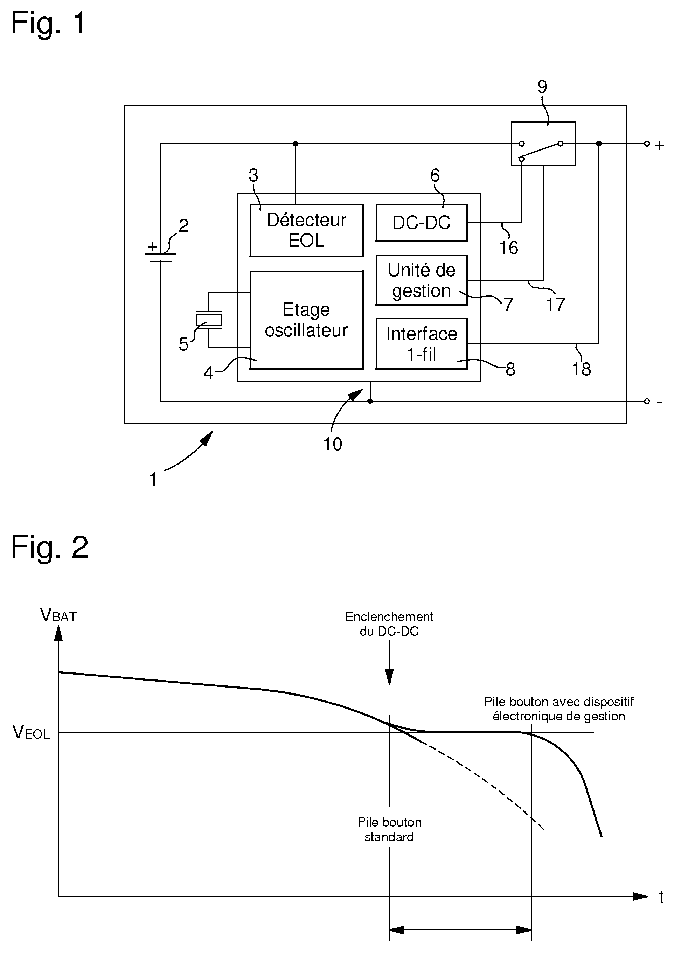

La figure 1 représente schématiquement de manière générale tous les composants de la batterie intelligente 1. Cette batterie peut se présenter sous la forme d'une batterie bouton de manière à être placée dans un logement de batterie d'un appareil électrique, tel qu'une montre, pour l'alimentation électrique des éléments électroniques de l'appareil électrique.

La batterie intelligente 1 comprend un circuit électronique 10 de gestion de la tension d'alimentation, qui est relié aux deux bornes d'alimentation positive et négative de la batterie 2. Le circuit électronique 10 permet avant tout de gérer de manière optimale la décharge de la batterie tout en signalant la fin de vie de batterie, lorsque la tension de la batterie 2 est proche d'un seuil de fin de vie de batterie. Le circuit électronique 10 peut être intégré dans la structure de la batterie 2 ou disposé sur une surface extérieure de la structure de batterie.

Ce circuit électronique 10 comprend un détecteur de fin de vie de batterie 3 désigné EOL ("end of life" en terminologie anglaise), un étage oscillateur 4, dont l'oscillateur peut être relié à un résonateur à quartz traditionnel 5, un convertisseur DC-DC 6, une unité de gestion 7, une interface à 1-fil 8 pour la transmission ou réception de signaux de données ou commandes, et un commutateur 9 commandé par l'unité de gestion. L'unité de gestion 7 est également reliée au détecteur de fin de vie de batterie 3, à l'étage oscillateur 4, au convertisseur DC-DC 6 et à l'interface à 1-fil 8. L'unité de gestion 7 peut ainsi contrôler le fonctionnement du convertisseur DC-DC 6, de l'interface à 1-fil 8, et du commutateur 9 en fonction du niveau de tension de la batterie 2 détecté par le détecteur de fin de vie de batterie 3.

Le détecteur de fin de vie de batterie 3 est relié à la borne positive de la batterie 2 de manière à déterminer le moment où la valeur de la tension fournie par la batterie 2 atteint un seuil de fin de vie de batterie déterminé. Dans le cas d'une batterie bouton, le seuil de fin de vie de batterie peut être défini par exemple à 1.2 V, mais peut également être défini inférieur à cette valeur. Pour pouvoir effectuer la détection de fin de vie de batterie, le détecteur 3 peut comprendre un comparateur, dont une première entrée est reliée à une tension de référence définie en fonction du seuil défini de fin de vie de batterie, et dont une seconde entrée est reliée à un noeud d'un diviseur capacitif relié entre les bornes positive et négative de la batterie 2. Une fois que le niveau de la tension de batterie se trouve au seuil de fin de vie de batterie, le comparateur fournit un signal de sortie à l'unité de gestion 7, qui commande l'enclenchement du convertisseur DC-DC 6.

Le commutateur 9 du circuit électronique est sous la forme d'un sélecteur d'alimentation. Une première entrée de ce commutateur 9 est reliée de préférence à la borne positive de la batterie 2, et une seconde entrée est reliée à une sortie du convertisseur DC-DC 6 pour recevoir une tension de sortie 16 du convertisseur lors de son fonctionnement. La sortie du commutateur 9 est de préférence reliée à une borne positive externe de la batterie électronique 1 pour fournir la tension de la batterie 2, quand son niveau de tension est au-dessus du seuil de fin de vie de batterie détecté par le détecteur 3. Par contre, la sortie du commutateur 9 fournit la tension de sortie 16 du convertisseur DC-DC 6, quand le niveau de tension de la batterie 2 est égal ou au-dessous du seuil de fin de vie de batterie. Dans ce cas de figure, l'unité de gestion 7 fournit un signal de commande 17 au commutateur 9 pour relier la sortie du convertisseur DC-DC à la borne positive externe de la batterie intelligente 1. Ainsi, la durée de fin de vie de batterie peut être prolongée par l'enclenchement du convertisseur DC-DC 6, qui est de préférence un convertisseur de type Boost. Ce convertisseur de type Boost permet d'élever la tension présente aux bornes externes de la batterie intelligente 1, lorsque la batterie 2 a atteint le seuil de fin de vie de batterie.

L'étage oscillateur 4 est utilisé pour cadencer les opérations dans le convertisseur DC-DC 6, dans l'unité de gestion 7, et dans l'interface à 1-fil 8. Cet étage oscillateur 4 peut être composé de préférence d'un oscillateur relié à un résonateur à quartz horloger 5 pour fournir un signal oscillant à une fréquence de l'ordre de 32'768 Hz, et de diviseurs de fréquence en série pour diviser la fréquence du signal oscillant. Le nombre de diviseurs par deux peut être par exemple égal à 15 pour pouvoir diviser la fréquence du signal oscillant afin de fournir un signal d'horloge à 1 Hz pour cadencer les éléments du circuit électronique 10.

Il est à noter encore que l'étage oscillateur 4 peut être composé d'un oscillateur du type RC et de diviseurs de fréquence comme susmentionné. Un tel oscillateur du type RC peut être entièrement intégré dans le circuit intégré électronique, ce qui n'est pas le cas du résonateur à quartz. Cependant, un tel oscillateur du type RC fournit un signal oscillant avec une précision moins grande que le signal oscillant généré par un oscillateur à résonateur quartz.

L'interface à 1-fil 8 est reliée directement à l'unité de gestion et est utilisée pour la transmission d'information par une des bornes externes de la batterie intelligente 1. De préférence, l'interface à 1-fil est reliée à la borne positive externe de la batterie intelligente 1 pour pouvoir transmettre un signal modulé de données ou commandes 18 par un bus à 1-fil à un appareil électrique, qui comprend la batterie intelligente. Cette interface à 1-fil peut être du type Dallas et peut être d'une réalisation comme décrite dans le circuit AVR318 d'Atmel. Le protocole 1-Wire^{™} de Dallas Semiconductor/Maxim Integrated Products, de l'interface permet une communication bidirectionnelle asynchrone. Dans le signal modulé de données ou commandes, qui est numérique, un bit de donnée est transmis par le bus de l'interface à 1-fil 8 par fenêtre de temps définie. Pour transmettre un bit de donnée à l'état "1", l'interface tire un courant ou abaisse la tension pendant une première durée, alors que pour transmettre un bit de donnée à l'état "0", l'interface tire un courant ou abaisse la tension sur l'alimentation pendant une seconde durée, qui est supérieure à la première durée comme expliqué dans le circuit AVR318.

L'interface à 1-fil 8, qui est contrôlée par l'unité de gestion 7 cadencée par le signal d'horloge de l'étage oscillateur 4, permet de transmettre un signal modulé de données de préférence par la borne positive externe de la batterie intelligente 1. Le signal modulé de données comprend notamment l'information de fin de vie de batterie, du type de batterie, de l'autonomie restante de la batterie ou tout autre type d'information à communiquer à l'appareil électrique. L'interface à 1-fil peut également transmettre un signal modulé de données, qui est un signal top seconde, qui représente un code prédéfini envoyé chaque seconde.

Bien entendu l'interface à 1-fil 8 peut également recevoir un signal modulé de données ou commandes 18 provenant de l'appareil électrique. Le signal modulé reçu par l'interface à 1-fil 8 peut concerner par exemple la fixation du seuil de tension de fin de vie de batterie à partir duquel le convertisseur DC-DC 6 doit être mis en fonction ou une autre commande ou donnée. Ce seuil de fin de vie de batterie reçu par l'interface à 1-fil 8 doit être mémorisé par exemple dans une mémoire non-volatile de l'unité de gestion 7. L'unité de gestion 7 peut adapter le seuil de fin de vie de batterie du détecteur 3 en modifiant la tension de référence ou le diviseur capacitif. Un signal modulé peut aussi être reçu par l'interface à 1-fil 8 notamment pour calibrer l'étage oscillateur 4 par l'intermédiaire de l'unité de gestion 7 munie d'un processeur, si la batterie intelligente est placée dans une montre.

définir la batterie intelligente 1. Dans ce cas de figure, il peut aussi être prévu une jauge de courant de manière à compter l'énergie tirée de la batterie, ainsi que l'énergie fournie à ladite batterie.

A la figure 2, il est représenté un graphe représentant l'évolution de la tension d'alimentation fournie par la batterie intelligente selon l'invention par rapport à l'évolution de la tension d'alimentation fournie par une batterie traditionnelle. Dès l'instant où la tension de la batterie V_{BAT} s'approche du seuil de tension de fin de vie de batterie V_{EOL}, l'unité de gestion du circuit électronique met en fonction le convertisseur DC-DC. L'énergie prélevée de la batterie intelligente est ainsi fournie par l'intermédiaire du convertisseur, ce qui permet de prolonger la durée de vie de la batterie interne reliée au circuit électronique avant de changer la batterie intelligente de l'appareil électrique la comprenant. En fonction de la décharge de la batterie intelligente, il peut aussi être envisagé de limiter le courant maximum fourni afin d'augmenter encore la durée de vie de ladite batterie.

Il est encore à noter qu'il peut être prévu encore de limiter l'impact énergétique du circuit électronique 10 de gestion de la tension d'alimentation notamment sur la durée de vie de la batterie. Il peut être envisageable d'introduire un cycle d'enclenchement et de déclenchement, définissant un rapport cyclique, pour permettre la mesure de la tension de la batterie 2 notamment par le détecteur 3 à intervalles plus ou moins longs en fonction de l'état de la batterie. Normalement au moins l'unité de gestion 7 et l'étage oscillateur 4 peuvent être continuellement en fonction pour l'enclenchement et le déclenchement du détecteur 3 selon un rapport cyclique déterminé.

Des premiers intervalles longs de mesure sont prévus au début de l'utilisation de la batterie avec une tension V_{BAT} bien au-dessus de la limite de fin de vie de batterie. Il peut être défini un second seuil de tension dans le circuit électronique pour définir si la tension V_{BAT} est bien au-dessus de ce second seuil de tension. Des seconds intervalles courts de mesure sont prévus par contre, lorsque la tension V_{BAT} se rapproche du seuil critique de fin de vie de batterie en-dessous du second seuil de tension.

Ce type de cycle peut être géré de manière interne avec uniquement une petite partie du circuit électronique en fonction comme indiqué ci-devant, et capable de réveiller les autres composants du circuit si nécessaire. Ceci engendre une consommation de quelques dizaines de nano-ampères. Ce type de cycle peut aussi être piloté par la circuiterie électronique de l'appareil électrique ou du produit, qui comprend la batterie intelligente.

A partir de la description qui vient d'être faite, plusieurs variantes de la batterie intelligente munie du circuit électronique de gestion de la tension d'alimentation peuvent être conçues par l'homme du métier sans sortir du cadre de l'invention définie par les revendications. Le détecteur de fin de vie de batterie peut comprendre un diviseur résistif au lieu d'un diviseur capacitif à l'entrée du comparateur. Le convertisseur DC-DC peut être de type Buck et Boost. Un changement de fréquence du signal d'horloge fourni par l'étage oscillateur peut être contrôlé par l'intermédiaire de l'unité de gestion en sélectionnant une des sorties de chaque diviseur par deux.

## Revendications

1. Batterie intelligente (1), qui comprend un circuit électronique (10) de gestion de la tension d'alimentation relié à une batterie (2), le circuit électronique comprenant un détecteur (3) de fin de vie de batterie, une unité de gestion (7), un étage oscillateur (4) et une interface (8) de communication de données ou commandes, et dans laquelle l'interface (8) de communication de données ou commandes est reliée à une des bornes de tension d'alimentation de la batterie intelligente pour transmettre et recevoir un signal modulé numérique de données ou commandes par une des bornes de tension d'alimentation, et est agencée pour recevoir un signal modulé d'un appareil électrique alimenté par la batterie intelligente,
et **caractérisé en ce que** le signal modulé reçu par l'interface comprend une commande de fixation du seuil de tension de fin de vie de batterie à partir duquel un convertisseur DC-DC (6) du circuit électronique (10) est mis en fonction par l'unité de gestion (7) pour la fourniture de la tension d'alimentation de la batterie intelligente.

2. Batterie intelligente (1) selon la revendication 1, **caractérisée en ce que** l'interface (8) de communication de données ou commandes est contrôlée par l'unité de gestion (7), qui est reliée au détecteur (3) de fin de vie de batterie, pour la transmission d'un signal modulé comprenant au moins une information de fin de vie de batterie.

3. Batterie intelligente (1) selon la revendication 1, **caractérisée en ce que** le circuit électronique (10) comprend un convertisseur DC-DC (6) mis en fonction, quand la tension d'alimentation de la batterie (2) est proche ou égale à un seuil de fin de vie de batterie, afin que le convertisseur fournisse la tension d'alimentation de la batterie intelligente.

4. Batterie intelligente (1) selon la revendication 3, **caractérisée en ce que** l'unité de gestion (7) est reliée au détecteur (3) de fin de vie de batterie, à l'étage oscillateur (4), au convertisseur DC-DC (6) et à l'interface (8) de communication de données ou commandes, et **en ce que** l'unité de gestion (7) commande la mise en fonction du convertisseur DC-DC (6), dès que le détecteur (3) de fin de vie de batterie fournit un signal de sortie à l'unité de gestion, quand la tension d'alimentation de la batterie (2) est proche ou égale au seuil de fin de vie de batterie.

5. Batterie intelligente (1) selon la revendication 1, **caractérisée en ce que** l'interface (8) de communication de données ou commandes est reliée à une borne positive externe de la tension d'alimentation de la batterie intelligente pour la transmission du signal modulé.

6. Batterie intelligente (1) selon la revendication 5, **caractérisée en ce qu'**une borne positive de la batterie (2) est reliée à une première entrée d'un commutateur (9) du circuit électronique (10), alors qu'une seconde entrée du commutateur (9) est reliée à une sortie d'un convertisseur DC-DC (6) mis en fonction, quand la tension d'alimentation de la batterie (2) est proche ou égale à un seuil de fin de vie de batterie, **en ce qu'**une sortie du commutateur (9) est reliée à la borne positive externe de la batterie intelligente, et **en ce que** le commutateur (9) est commandé par un signal de commande (17) de l'unité de gestion (7) pour fournir la tension de la batterie (2) à la borne positive externe, si la tension de la batterie est au-dessus du seuil de fin de vie de batterie ou pour fournir la tension de sortie du convertisseur DC-DC (6), si la tension de la batterie est égale ou inférieure au seuil de fin de vie de batterie.

7. Batterie intelligente (1) selon la revendication 1, **caractérisée en ce que** l'étage oscillateur (4) comprend un oscillateur relié à un résonateur à quartz (5) pour fournir un signal oscillant, et une série de diviseurs pour diviser la fréquence du signal oscillant pour fournir un signal d'horloge pour cadencer les opérations de l'unité de gestion (7).

8. Batterie intelligente (1) selon la revendication 7, **caractérisée en ce que** le résonateur à quartz est un résonateur à quartz horloger de manière que l'oscillateur fournisse un signal oscillant à une fréquence de 32768 Hz.

9. Batterie intelligente (1) selon la revendication 8, **caractérisée en ce que** les diviseurs sont des diviseurs par deux, qui sont en nombre de quinze de manière à diviser la fréquence du signal oscillant pour fournir un signal d'horloge à 1 Hz pour permettre à l'interface (8) de communication de données ou commandes de transmettre chaque seconde un signal modulé de données, qui est un signal top seconde.

10. Batterie intelligente (1) selon la revendication 1, **caractérisée en ce que** l'unité de gestion (7) comprend une mémoire non-volatile pour mémoriser le seuil de tension de fin de vie de batterie, afin d'adapter le détecteur (3) de fin de vie de batterie.

11. Batterie intelligente (1) selon la revendication 1, **caractérisée en ce que** le détecteur (3) de fin de vie de batterie peut être enclenché et déclenché par intervalles temporels définis selon un rapport cyclique déterminé par l'unité de gestion (7) cadencé par l'étage oscillateur (4), pour la mesure du niveau de tension de la batterie (2).

12. Batterie intelligente (1) selon la revendication 11, **caractérisée en ce que** le détecteur (3) peut être enclenché et déclenché dans des premiers intervalles temporels, si le niveau de tension de la batterie (2) est au-dessus d'un second seuil de tension supérieur à un premier seuil de fin de vie de batterie, et **en ce que** le détecteur (3) peut être enclenché et déclenché dans des seconds intervalles temporels inférieurs aux premiers intervalles temporels, si le niveau de tension de la batterie (2) est au-dessous du second seuil de tension.

## Patentansprüche

1. Intelligente Batterie (1), die eine elektronische Schaltung (10) zum Steuern der Versorgungsspannung, die mit einer Batterie (2) verbunden ist, umfasst, wobei die elektronische Schaltung einen Detektor (3) für das Lebensdauerende der Batterie, eine Steuereinheit (7), eine Oszillatorstufe (4) und eine Schnittstelle (8) für die Kommunikation von Daten oder Befehlen umfasst,
wobei die Schnittstelle (8) für die Kommunikation von Daten oder Befehlen mit einem der Versorgungsspannungsanschlüsse der intelligenten Batterie verbunden ist, um ein digitales moduliertes Daten- oder Befehlssignal über einen der Versorgungsspannungsanschlüsse zu senden und zu empfangen, und dafür ausgelegt ist, ein moduliertes Signal eines Elektrogeräts, das von der intelligenten Batterie versorgt wird, zu empfangen,
und **dadurch gekennzeichnet, dass** das über die Schnittstelle empfangene modulierte Signal einen Befehl zum Festlegen des Lebensdauerende-Spannungsschwellenwerts der Batterie enthält, anhand dessen ein Gleichspannungs/Gleichspannungs-Wandler (6) der elektronischen Schaltung (10) durch die Steuereinheit (7) betrieben wird, um die Versorgungsspannung der intelligenten Batterie zu liefern.

2. Intelligente Batterie (1) nach Anspruch 1, **dadurch gekennzeichnet, dass** die Schnittstelle (8) für die Kommunikation von Daten oder Befehlen durch die Steuereinheit (7) gesteuert wird, die mit dem Detektor (3) für das Lebensdauerende der Batterie verbunden ist, um ein moduliertes Signal, das wenigstens eine Information über das Lebensdauerende der Batterie enthält, zu übertragen.

3. Intelligente Batterie (1) nach Anspruch 1, **dadurch gekennzeichnet, dass** die elektronische Schaltung (10) einen Gleichspannungs/Gleichspannungs-Wandler (6) umfasst, der betrieben wird, wenn die Versorgungsspannung der Batterie (2) in der Nähe eines Lebensdauerende-Schwellenwerts der Batterie liegt oder gleich diesem ist, damit der Wandler die Versorgungsspannung der intelligenten Batterie liefert.

4. Intelligente Batterie (1) nach Anspruch 3, **dadurch gekennzeichnet, dass** die Steuereinheit (7) mit dem Detektor (3) für das Lebensdauerende der Batterie, mit der Oszillatorstufe (4), mit dem Gleichspannungs/Gleichspannungs-Wandler (6) und mit der Schnittstelle (8) für die Kommunikation von Daten oder Befehlen verbunden ist und dass die Steuereinheit (7) den Betrieb des Gleichspannungs/Gleichspannungs-Wandlers (6) steuert, sobald der Detektor (3) für das Lebensdauerende der Batterie ein Ausgangssignal an die Steuereinheit liefert, wenn die Versorgungsspannung der Batterie (2) in der Nähe des Lebensdauerende-Schwellenwerts der Batterie liegt oder gleich diesem ist.

5. Intelligente Batterie (1) nach Anspruch 1, **dadurch gekennzeichnet, dass** die Schnittstelle (8) für die Kommunikation von Daten oder Befehlen mit einem externen positiven Anschluss der Versorgungsspannung der intelligenten Batterie verbunden ist, um das modulierte Signal zu übertragen.

6. Intelligente Batterie (1) nach Anspruch 5, **dadurch gekennzeichnet, dass** ein positiver Anschluss der Batterie (2) mit einem ersten Eingang eines Kommutators (9) der elektronischen Schaltung (10) verbunden ist, während ein zweiter Eingang des Kommutators (9) mit einem Ausgang eines Gleichspannungs/Gleichspannungs-Wandlers (6) verbunden ist, der betrieben wird, wenn die Versorgungsspannung der Batterie (2) in der Nähe eines Lebensdauerende-Schwellenwerts der Batterie liegt oder gleich diesem ist, dass ein Ausgang des Kommutators (9) mit dem externen positiven Anschluss der intelligenten Batterie verbunden ist und dass der Kommutator (9) durch ein Steuersignal (17) der Steuereinheit (7) gesteuert wird, um die Spannung der Batterie (2) an den externen positiven Anschluss zu liefern, wenn die Spannung der Batterie über dem Lebensdauerende-Schwellenwert der Batterie liegt, oder um die Ausgangsspannung des Gleichspannungs/Gleichspannungs-Wandlers (6) zu liefern, wenn die Spannung der Batterie gleich oder kleiner als der Lebensdauerende-Schwellenwert der Batterie ist.

7. Intelligente Batterie (1) nach Anspruch 1, **dadurch gekennzeichnet, dass** die Oszillatorstufe (4) einen Oszillator umfasst, der mit einem Quarzresonator (5) verbunden ist, um ein oszillierendes Signal zu liefern, und eine Reihe von Teilern umfasst, um die Frequenz des oszillierenden Signals zu teilen, um ein Taktsignal zu liefern, um die Operationen der Steuereinheit (7) zu takten.

8. Intelligente Batterie (1) nach Anspruch 7, **dadurch gekennzeichnet, dass** der Quarzresonator ein Quarzresonator-Taktgeber ist, derart, dass der Oszillator ein oszillierendes Signal mit einer Frequenz von 32768 Hz liefert.

9. Intelligente Batterie (1) nach Anspruch 8, **dadurch gekennzeichnet, dass** die Teiler Teiler durch zwei sind, die in einer Anzahl von fünfzehn vorhanden sind, derart, dass die Frequenz des oszillierenden Signals geteilt wird, um ein Taktsignal mit 1 Hz zu liefern, um der Schnittstelle (8) für die Kommunikation von Daten oder Befehlen zu erlauben, jede Sekunde ein moduliertes Datensignal zu übertragen, das ein Sekundenzeitzeichen ist.

10. intelligente Batterie (1) nach Anspruch 1, **dadurch gekennzeichnet, dass** die Steuereinheit (7) einen nichtflüchtigen Speicher umfasst, um den Lebensdauerende-Spannungsschwellenwert der Batterie zu speichern, um den Detektor (3) für das Lebensdauerende der Batterie anzupassen.

11. Intelligente Batterie (1) nach Anspruch 1, **dadurch gekennzeichnet, dass** der Detektor (3) für das Lebensdauerende der Batterie in Zeitintervallen verriegelt und ausgelöst werden kann, die entsprechend dem Taktzyklus definiert sind, der durch die durch die Oszillatorstufe (4) getaktete Steuereinheit (7) bestimmt wird, um den Spannungspegel der Batterie (2) zu messen.

12. Intelligente Batterie (1) nach Anspruch 11, **dadurch gekennzeichnet, dass** der Detektor (3) in ersten Zeitintervallen verriegelt und ausgelöst werden kann, falls der Spannungspegel der Batterie (2) über einem zweiten Spannungsschwellenwert liegt, der höher als ein erster Lebensdauerende-Schwellenwert der Batterie ist, und dass der Detektor (3) in zweiten Zeitintervallen verriegelt und ausgelöst werden kann, die kleiner als die ersten Zeitintervalle sind, falls der Spannungspegel der Batterie (2) unter dem zweiten Spannungsschwellenwert liegt.

## Claims

1. Smart battery (1) which includes an electronic supply voltage management circuit (10) connected to a battery (2), the electronic circuit including a battery end-of-life detector (3), a management unit (7), an oscillator stage (4) and a data or command communication interface (8), and in which the data or command communication interface (8) is connected to one of the supply voltage terminals of the smart battery for transmitting and receiving a modulated digital data or command signal through one of the supply voltage terminals, and is arranged for receiving a modulated signal from an electrical apparatus powered by the smart battery, and
**characterized in that** the modulated signal received by the interface includes a command to set the battery end-of-life threshold after which a DC-DC converter (6) of the electronic circuit (10) is powered on by the management unit (7) to supply the supply voltage of the smart battery.

2. Smart battery (1) according to claim 1, **characterized in that** the data or command communication interface (8) is controlled by the management unit (7), which is connected to the battery end-of-life detector (3), for the transmission of a modulated signal including at least battery end-of-life information.

3. Smart battery (1) according to claim 1, **characterized in that** the electronic circuit (10) includes a DC-DC converter (6) powered on when the supply voltage of the battery (2) is close or equal to a battery end-of-life threshold, so that the converter supplies the supply voltage of the smart battery.

4. Smart battery (1) according to claim 3, **characterized in that** the management unit (7) is connected to the battery end-of-life detector (3), to the oscillator stage (4), to the DC-DC converter (6) and to the data or command communication interface (8), and **in that** the management unit (7) operates the DC-DC converter (6), as soon as the battery end-of-life detector (3) supplies an output signal to the management unit, when the supply voltage of the battery (2) is close or equal to the battery end-of-life threshold.

5. Smart battery according to claim 1, **characterized in that** the data or command communication interface (8) is connected to an external positive supply voltage terminal of the smart battery for the transmission of the modulated signal.

6. Smart battery (1) according to claim 5, **characterized in that** a positive terminal of the battery (2) is connected to a first input of a switch (9) of the electronic circuit (10), whereas a second input of the switch (9) is connected to an output of a DC-DC converter (6) powered on when the supply voltage of the battery (2) is close or equal to a battery end-of-life threshold, **in that** an output of the switch (9) is connected to the external positive terminal of the smart battery, and **in that** the switch (9) is controlled by a command signal (17) from the management unit (7) to supply the voltage of the battery (2) to the external positive terminal, if the battery voltage is above the battery end-of-life threshold, or to supply the output voltage of the DC-DC converter (6) if the battery voltage is equal to or below the battery end-of-life threshold.

7. Smart battery (1) according to claim 1, **characterized in that** the oscillator stage (4) includes an oscillator connected to a quartz resonator (5) for supplying an oscillating signal, and a series of dividers for dividing the oscillating signal frequency to supply a clock signal for clocking the operations of the management unit (7).

8. Smart battery (1) according to claim 7, **characterized in that** the quartz resonator is a clock quartz resonator so that the oscillator supplies an oscillating signal at a frequency of around 32768 Hz.

9. Smart battery (1) according to claim 8, **characterized in that** the dividers are dividers-by-two, which are fifteen in number so as to divide the oscillating signal frequency to supply a clock signal at 1 Hz to allow data or command communication interface (8) to transmit, every second, a modulated data signal, which is a top second signal.

10. Smart battery (1) according to claim 1, **characterized in that** the management unit (7) includes a non-volatile memory for storing the battery end-of-life voltage threshold, in order to adapt the battery end-of-life detector (3).

11. Smart battery (1) according to claim 1, **characterized in that** the battery end-of-life detector (3) can be powered on and off at time intervals set in a cyclical ratio or duty cycle determined by the management unit (7) clocked by the oscillator stage (4) for measuring the voltage level of the battery (2).

12. Smart battery (1) according to claim 11, **characterized in that** the detector (3) can be powered on and off in first time intervals, if the voltage level of the battery (2) is above a second voltage threshold higher than a first battery end-of-life threshold, and **in that** the detector (3) can be powered on and off in second time intervals shorter than the first time intervals, if the voltage level of the battery (2) is below the second voltage threshold.
